# EUROPEAN PATENT APPLICATION

(11) **EP 2 768 072 A1**
(43) Date of publication of application: **20.08.2014**
(21) Application number: 13155432.1
(22) Date of filing: 15.02.2013
(51) Int. Cl.: H01P 1/18, H01Q 9/04

(54) **Phase shifting device**

(71) Applicant: Technische Universität Darmstadt, 64285 Darmstadt (DE)
(72) Inventor: Jakoby, Rolf, 61191 Rosbach (DE); Karabey, Onur Hamza, 63263 Neu-Isenburg (DE); Hu, Wenjuan, 64342 Seeheim Jugenheim (DE)
(74) Representative: Stumpf, Peter

(57) **Abstract**

The present invention relates to a phase shift device comprising a transmission line filled with liquid crystal material. The liquid crystal material is piecewise configured as tunable component. The proposed phase shifter combines low response time with a high performance in a compact configuration.

## Description

The present invention relates a phase shifting device with at least one tunable component. This phase shift is frequency independent (phase shifter) or frequency dependent (variable delay line).

The shortage in the available frequency spectrum for radio communications and the requirement for more functionality in smaller volume increase demand for reconfigurable components. Here for radio frequency (RF) is meant a rate of oscillation in the range of about 3 kHz to 300 GHz, which corresponds to the frequency of radio waves, and the alternating currents which carry radio signals. Depending on the device requirements there are different possible solutions like PIN diodes, MEMS or tunable dielectrics to design agile RF components.

Phase shifting devices are one of the key elements for these reconfigurable electronic beam steering antennas.

### State of the Art/Prior Art

From the state of the art the following documents are cited as examples of the above mentioned phase shifters:
1. US patent, US 8,305,259 B2
2. US patent, US 8,022,861 B2
3. US patent, US 8,013,688 B2
4. PCT patent application WO 2012/123072 A1
5. US patent application, US 2009/0302976 A1
6. F. Goelden, A. Gaebler, M. Goebel, A. Manabe, S. Mueller, and R. Jakoby, "Tunable liquid crystal phase shifter for microwave frequencies,"Electronics Letters, vol. 45, no. 13, pp. 686-687, 2009.
7. O. H. Karabey, F. Goelden, A. Gaebler, S. Strunck, and R. Jakoby, "Tunable loaded line phase shifters for microwave applications," inProc. IEEE MTT-S Int. Microwave Symp. Digest (MTT), 2011, pp. 1-4.

Microwave components such as phase shifters can be formed from microstrip lines. A microstrip line is a type of electrical planar transmission line which can be fabricated using printed circuit board technology. It consists of a conducting strip separated from a ground plane by a dielectric layer known as the substrate.

As in [1,3], the substrate can be formed by liquid crystal polymers (LCPs), which is a flexible material and also it is not tunable in there relative permittivity. Therefore, it is not convenient for design of a tunable device such as a varactor.

Liquid crystals (LCs) are matter in a state that has properties between those of conventional liquid and those of solid crystal. For instance, an LC may flow like a liquid, but its molecules may be orientated in a crystal-like way. In contrast to liquid crystal polymers (LCPs), liquid crystals (LCs) have a tunable relative permittivity.

In prior art [6], the tuning speed of an LC devices is reduced by a topology, in which coplanar waveguides (CPW) are loaded with shunt LC varactors. One of the drawbacks there is the high metallic loss of the CPW. Additionally, due to the CPW, the varactors were implemented by patches as floating electrodes bridging the centre conductor and the ground plane. This results in less tuning efficiency and high insertion loss of such an artificial transmission line. Similarly in [7], the tuning efficiency of the LC varactors is improved by using a parallel plate capacitor topology. However, there a slotline was loaded with these LC varactors in shunts. Indeed, loading a microstrip line results in higher performance because microstrip lines feature system-inherently low losses.

### Task of the invention

Therefore it is the task of the invention to reduce the disadvantages in the prior art and propose a favorable phase shifting device with low response time with a high performance, with comprises both features simultaneously in a compact and planar configuration.

### Detailed description of the invention

A transmission line (microstrip line) is formed by two electrodes: Signal and ground electrodes. The material of the electrodes is preferably low resistive RF electrodes such as Ag, Cu or Au. Other materials or alloys with similar conductive properties are possible. The signal electrode is divided into several pieces along the length. These pieces are implemented on the top side of bottom glass and on the bottom side of top glass. The top glass and the bottom glass are stacked in such a way that a in plan view continuous signal electrode is formed. The terms top glass and bottom glass do not indicate that other suitable materials are waived. Additionally, there are some sections, where the top and bottom electrodes are overlapping. At least, this overlapping area between the two glasses, are filled with a tunable liquid crystal material. Therefore, the overlapping area forms a metal-insulator-metal type capacitor. In this case, since the insulator is the tunable liquid crystal material, this area forms a dialectical tunable component (varactor). This tunable component enables to construct this phase shifting device in a very compact way since loading a transmission line introduce the well known slow-wave effect, resulting in physically short transmission lines...

Due to LC technology, the varactors feature low losses compared to other technologies such as semiconductors for frequencies higher than 5 GHz preferably frequencies higher than 10 GHz. Additionally, since microstrip line is used, the phase shifter losses would be much less than compared to [6,7].

In a exemplary embodiment the glass substrates are exemplary chosen to be a 700 µm thick borofloat glass from Schott AG with ε_{r,glass} = 4.6 and its loss tangent tanδ = 0.0037 at 25°C and at 1 MHz. A LC mixture, whoserelative dielectric constant continuously tuneable between 2.4 and 3.2, is used in the following execution example. The maximum dielectric loss tangent tand of this material is less than 0.006 for all tuning states. The LC layer (from metal to metal) is specified to 3 µm to obtain a fast response time that is less than 25 ms. The device provides 367° differential phase shift at 20 GHz with 6.1 dBinsertion loss at maximum.

An important parameter for quantifying the RF performance of these devices is a frequency-dependent figure of merit (FoM). This is defined by the ratio of the maximum differential phase shift and the highest insertion loss over all tuning states.

Hence, the FoM of the exemplary embodiment is 60°/cB at 20 GHz.

In a further embodiment the phase shifting device comprises more than one of dialectical tunable components.

The tuning is performed by control electrodes. These electrodes operate as control element. These electrodes transmit the different bias voltages to drive the varactors through bias lines. The bias lines are preferably made of a low conductive material in order not to affect the RF circuitry. For this purpose, low conductive electrodes can be used since they become transparent for the RF signal. Typical materials for the bias lines are preferably ITO (indium thin oxide), NiCr (nickel chromium) or some other alloys having a conductivity of less than 10e5 S/m.

In further embodiments the phase shifting device is combined with a radiating element to transmit the RF signal. Often radiating element are also referred to as patch antennas. The radiating elements and the feed lines are usually photoetched on the dielectric substrate. The radiating patch is configured as square, rectangular, thin strip (dipole), circular, elliptical, triangular, or any other formation.

In further embodiments the radiating element is an arbitrary-shaped microstrip patch antenna or a microstrip slot antenna.

Liquid crystals (LC) are suitable to realize tunable RF devices. LC can be employed as a tunable dielectric, specifically optimized LC mixtures offer high performance at microwave frequencies with a loss tangent below 0.006. The relative tunability, defined as the ratio of the tuning range of the permittivity to the maximum permittivity, is preferably between 5 and 30% or between 10 and 25% or between 15 and 30% or between 5 and 14%.

LC based planar phase shifters have to be customized depending on desired antenna performance. For this manner, this phase shifters is used in order to reduce insertion loss, to increase beam steering speed and to scan wide range.

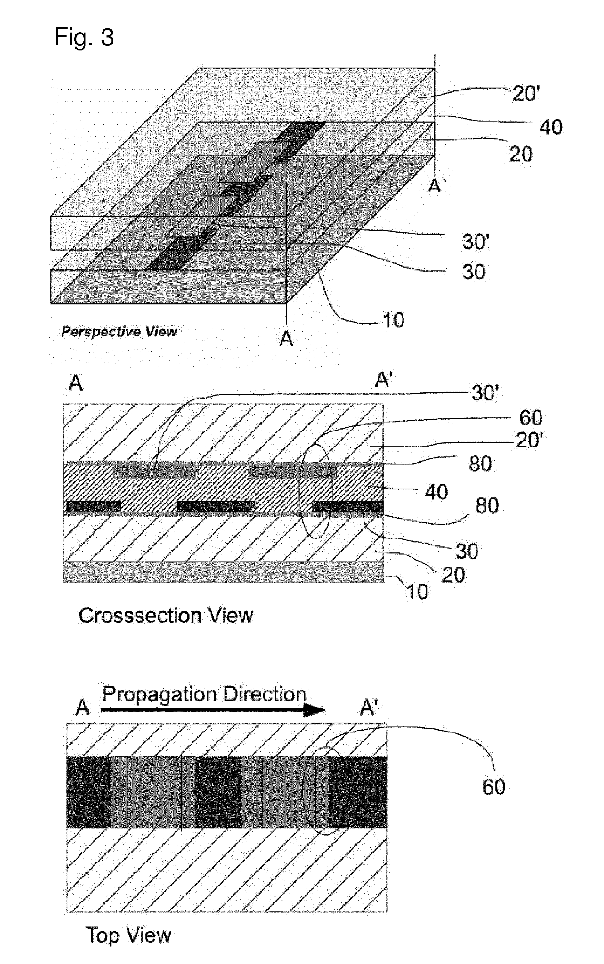

In this invention, a LC mixture optimized for RF applications is used. A possibility to realize tunable RF components with LC is presented in Fig. 3. It shows the cross section of an inverted microstrip line using LC as a tunable substrate for different bias voltages. The setup consists of two stacked substrates, the top one carrying the microstrip line and the lower one the ground plane. In between the two substrates, a thin LC layer is encapsulated.

In a first embodiment the planar transmission line and the antenna are coupled by using an aperture coupling method.

In a second embodiment the planar transmission line and the antenna are coupled by using a proximity coupling method.

In a third embodiment the planar transmission line and the antenna are coupled by using an insert feed method.

### DESCRIPTION OF THE DRAWINGS

Fig. 1 Schematic of a typical LC molecule and its temperature dependency
Fig. 2 Schematic of a prior art planar transmission line
Fig. 3 Schematic of a phase shift device with a LC varactor
Fig. 4 Schematic of different embodiments of the planar transmission line and a coupled antenna

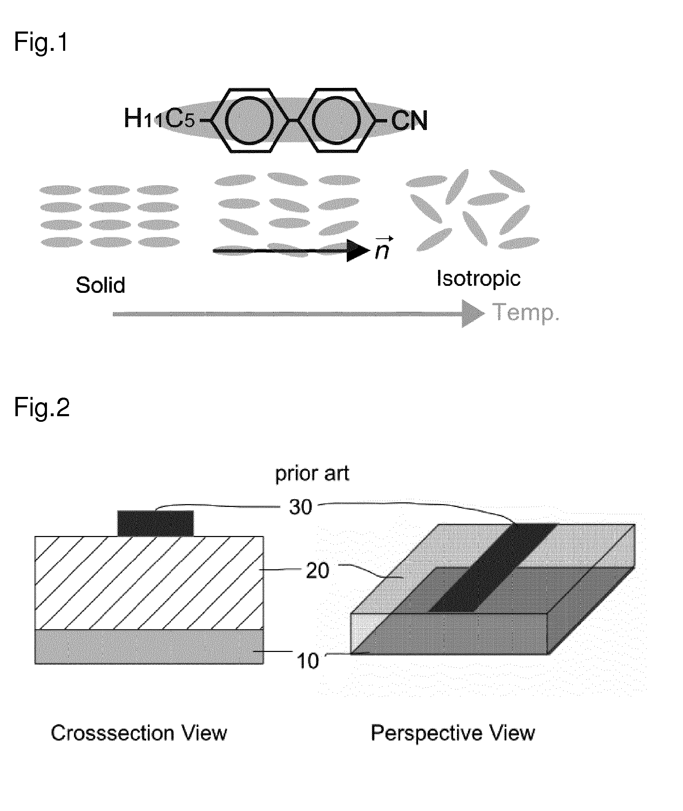

In general liquid crystal (LC) materials are anisotropic. This property stems from the rod-like shape of the molecules, as shown in an example structure of a typical LC molecule in Fig. 1. Here it is shown how the phase configuration of a LC material changes with increasing temperature. Together with the molecule in Fig. 1 the anisotropic dielectric properties are indicated. Since the material is liquid, the molecules feature only a weak molecular adhesion, and thus their orientation in the bulk can be changed. Owing to the rod-like shape, the molecules in a bulk tend to orient themselves in parallel order. The relative permittivity parallel to the molecule long axis is denoted as ε_{r,||}and perpendicular to the long axis as ε_{r,}⊥. With these two permittivities the loss tangents tan δ || and tan δ ⊥ are associated.

Fig.2 shows a prior art planar transmission line formed as a microstrip line. It consist of a ground electrode **(10)** and a continuous signal electrode **(30)** which are separated by a dielectric substrate **(20).** The propagation direction is along the signal electrode **(30)** inside the substrate.

Fig.3 shows a phase shift device line according to the invention. It contains a ground electrode **(10)** and signal electrodes **(30, 30'),** which form a planar transmission line, are divided into pieces. Between the ground and the signal electrode is a non-tunable dielectric substrate **(20),** preferable glass. The space between the pats of the signal electrodes **30** and **30'** is filled with a tunable liquid crystal material **(40).** Between the pieces there are overlapping areas **(70).** The pieces are stacked in such a way that a continuous signal electrode is formed from the top view.

The pieces of the electrodes are connected with control elements **(80)** which consist of a low conductive material preferably ITO (indium thin oxide), which is transparent for RF. These elements **(80)** transmit the bias voltage to tune the liquid crystal material **(40)** in the overlapping areas **(70).**

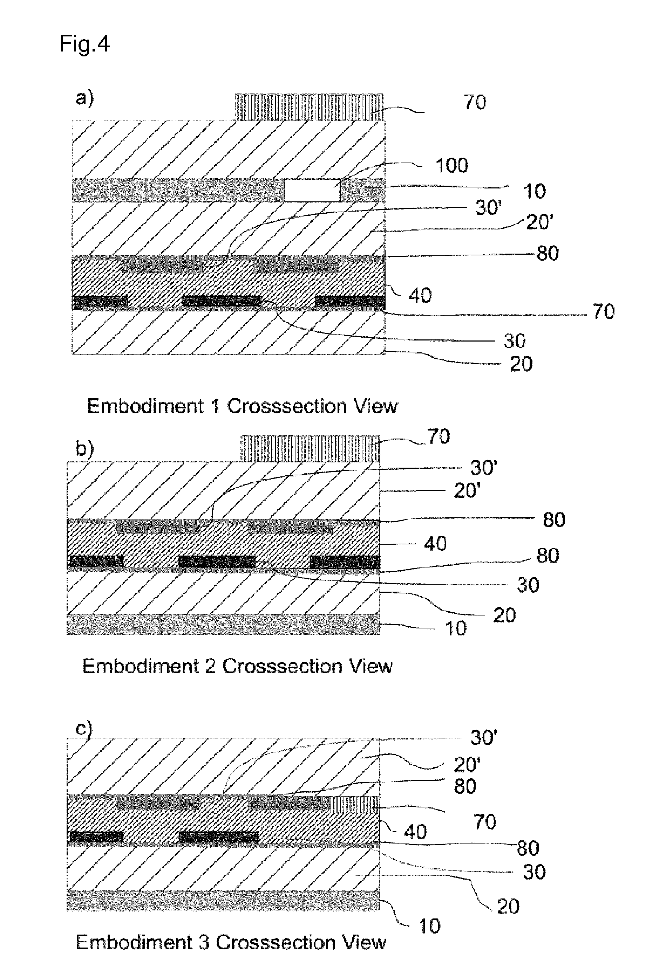

In Fig. 4 the different embodiments of coupling the microstrip delay line and the antenna are shown.

In Fig. 4a the planar transmission line **(30, 30')** and the antenna (patch) **(70)** are coupled by using an aperture coupling method. This coupling consists of two substrates separated by a ground plane **(10).** On the bottom side of the lower substrate **(20')** there is a microstrip feed line **(30, 30')** whose energy is coupled to the patch **(70)** through a slot **(100)** on the ground **(10).**

In Fig 4b the planar transmission line **(30, 30')** and the antenna **(70)** are coupled by using a proximity coupling method.

In Fig 4c the planar transmission line **(30, 30')** and the antenna **(70)** are coupled by using an insert feed coupling method.

### [References in the figures]

| | |
|---|---|
| 10 | ground electrode |
| 20 | Substrate (e.g. glass) bottom layer |
| 20' | substrate (e.g. glass) top layer |
| 30 | signal electrode (bottom) |
| 30' | signal electrode (top) |
| 40 | liquid crystal material |
| 60 | overlap |
| 70 | antenna |
| 80 | control element |
| 100 | slot |

## Claims

1. A phase shift device comprising a transmission line filled with liquid crystal material, **characterized in that** the liquid crystal material is piecewise configured as tunable component.

2. Phase shift device according to claim 1, **characterized in that** it comprises at least two serially connected tunable components.

3. Phase shift device according to claim 1 or 2, **characterized in that** it comprises liquid crystal material with relative permittivity tunability, defined as the ratio of the tuning range of the permittivity to the maximum permittivity between 5 and 30%

4. Phase shift device according to one of the preceding claims, **characterized in that** it comprises at least one control element.

5. Control element according to one of the preceding claims, **characterized in that** it consists of ITO (indium-thin-oxide).

6. Phase shift device according to one of the preceding claims, **characterized in that** it is combined with a radiating element

7. Radiating element according to one of the preceding claims, **characterized in that** it is a arbitrary-shaped microstrip patch antenna or a microstrip slot antenna.

8. Phase shift device according to one of the preceding claims, **characterized in that** the planar transmission line and the radiating element are coupled by using an aperture coupling method.

9. Phase shift device according to one of the preceding claims, **characterized in that** the planar transmission line and the radiating element are coupled by using a proximity coupling method.

10. Phase shift device according to one of the preceding claims, **characterized in that** planar transmission line and the radiating element are coupled by using an insert feed coupling method.
